# FASCICULE DE BREVET EUROPEEN

(11) **EP 2 591 463 B1**
(45) Date de publication et mention de la délivrance du brevet: **22.10.2014**
(21) Numéro de dépôt: 10793007.5
(22) Date de dépôt: 18.11.2010
(51) Int. Cl.: G06Q 20/00, G07F 7/10, H04L 9/32

(54) **Système et procédé d'identification et d'enregistrement d'identité sécurisés**
Sicheres System und Verfahren zur Feststellung und Aufzeichnung einer Identität
Secure system and method for the identification and recording of an identity

(30) Priorité: 08.07.2010 FR 1055573
(43) Date de publication de la demande: 15.05.2013
(73) Titulaire: ABM Technologies, 94140 Alfortville (FR)
(72) Inventeur: BOULANOUAR, Ryad, B-1180 Uccle/Bruxelles (BE)
(74) Mandataire: CAPRI
(86) Numéro de dépôt international: PCT/FR2010/052446
(87) Numéro de publication internationale: WO 2012/004465

(56) Documents cités:
- EP-A2- 1 280 115
- WO-A1-2006/074150
- WO-A2-2008/002979

## Description

La présente invention concerne un système et un procédé d'identification et d'enregistrement d'identité sécurisés.

Lorsqu'un utilisateur souhaite enregistrer son identité, par exemple lorsqu'il souhaite ouvrir une ligne de téléphone mobile chez un fournisseur téléphonique ou procéder à un transfert d'argent, il doit remplir un ou plusieurs formulaire(s), fournir des photocopies de sa carte d'identité ou de son passeport, ce qui prend généralement beaucoup de temps. Les points de vente concernés ne sont pas toujours équipés correctement de tables et de chaises permettant aux utilisateurs de remplir lesdits formulaires sans difficultés, de sorte qu'il est souvent compliqué et long de faire enregistrer son identité. De même, le temps passé par les conseillers ou vendeurs à assister l'utilisateur lors de cette phase d'enregistrement est perdu par rapport aux autres utilisateurs, ce qui rallonge les temps d'attente et diminue d'autant la rentabilité du magasin. De plus, actuellement lorsqu'un utilisateur s'enregistre par exemple pour ouvrir une ligne téléphonique, il ne peut pas utiliser cet enregistrement pour d'autres services et il doit donc à chaque fois recommencer cette phase d'enregistrement pour chaque service auquel il souhaite souscrire.

Le document WO 2008/002979 décrit un système et procédé d'identification et d'enregistrement d'identité biométrique sécurisé, qu'il comporte un terminal de paiement électronique situé dans un point de vente, un téléphone cellulaire de l'utilisateur à identifier, et une serveur pour authentifier les informations sonores relatives à l'identité de l'utilisateur qui sont communiquées avec ledit téléphone cellulaire.

La présente invention a pour but de fournir un système et un procédé d'enregistrement d'identité et d'identification sécurisée qui ne reproduit pas les inconvénients susmentionnés.

En particulier, la présente invention a pour but de fournir un tel système et procédé qui soit simple et rapide, tout en étant extrêmement fiable et sécurisé afin d'éviter au maximum les risques de fraude.

La présente invention a aussi pour but de fournir un tel système et procédé qui permet de réutiliser plusieurs fois le même enregistrement d'identité, sans avoir besoin de recommencer toute la procédure à chaque fois qu'une nouvelle identification sécurisée est nécessaire.

La présente invention a aussi pour but de fournir un tel système et procédé qui soit simple et peut coûteux à mettre en oeuvre.

La présente invention a donc pour objet un système d'identification et d'enregistrement d'identité sécurisé, comportant :
- des moyens de copie pour réaliser une copie numérique d'une pièce d'identité de l'utilisateur à identifier,
- au moins un serveur,
- des premiers moyens de transmission pour transmettre ladite copie numérisée audit serveur,
- des moyens de reconnaissance de caractère pour analyser ladite copie numérique et extraire de ladite copie numérique des informations relatives à l'identité de l'utilisateur de ladite copie numérique,
- au moins une base de données pour stocker ladite copie numérique et lesdites informations relatives à l'identité de l'utilisateur,
- un terminal de paiement électronique, notamment situé dans un point de vente,
- des seconds moyens de transmission pour transmettre lesdites informations relatives à l'identité de l'utilisateur vers ledit terminal de paiement électronique,
- un téléphone cellulaire de l'utilisateur à identifier, associé à un code secret,
- des troisièmes moyens de transmission pour transmettre le numéro dudit téléphone cellulaire à partir dudit terminal de paiement électronique vers ledit serveur,
- des moyens d'envoi d'une mélodie à jouer par ledit serveur audit terminal de paiement électronique,
- des moyens d'appel permettant audit serveur de réaliser une communication téléphonique avec ledit téléphone cellulaire, et
- des moyens d'authentification sonore par ledit serveur de ladite mélodie jouée par ledit terminal de paiement électronique via ladite communication téléphonique avec ledit téléphone cellulaire.

Avantageusement, ledit serveur comporte un module NSDT (Near Sound Data System) permettant d'appeler ledit téléphone cellulaire et de reconnaître une mélodie jouée par ledit terminal de paiement électronique.

Avantageusement, un module de gestion assure la sécurisation de toutes les transmissions.

Avantageusement, les moyens de transmission utilisent le réseau Internet.

Avantageusement, un module de gestion du terminal de paiement électronique est associé audit serveur pour gérer les transmissions entre ledit serveur et ledit terminal de paiement électronique.

Avantageusement, ledit terminal de paiement électronique comporte un afficheur, un clavier, une imprimante, un lecteur de carte magnétique, un haut parleur et un module de connexion à Internet.

Avantageusement, lesdits moyens de copie comportent un scanner.

Avantageusement, dans un point de vente, un scanner, un pad et un TPE/POS/POS sont reliés à une boîte de gestion gérant les connexions et liaisons des ces éléments entre eux et avec le serveur.

Avantageusement, ladite boîte de gestion, ledit scanner et ledit pad forment une seule unité globale.

La présente invention a aussi pour objet un procédé d'identification et d'enregistrement d'identité sécurisé, comportant les étapes suivantes :
- réaliser une copie numérique d'une pièce d'identité de l'utilisateur à identifier,
- transmettre ladite copie numérique à un serveur,
- réaliser une reconnaissance de caractères de ladite copie numérique pour extraire de ladite copie numérique des informations relatives à l'identité de l'utilisateur,
- stocker ladite copie numérique et lesdites informations relatives à l'identité de l'utilisateur dans au moins une base de données,
- transmettre à un terminal de paiement électronique, notamment situé dans un point de vente, lesdites informations relatives à l'identité de l'utilisateur,
- afficher lesdites informations relatives à l'identité de l'utilisateur sur l'afficheur dudit terminal de paiement électronique,
- saisir sur ledit terminal de paiement électronique le numéro de téléphone d'un téléphone cellulaire de l'utilisateur à identifier,
- saisir sur ledit terminal de paiement électronique un code secret associé audit numéro de téléphone,
- transmettre ledit numéro de téléphone audit serveur si ledit code secret est correct,
- envoyer dudit serveur audit terminal de paiement électronique une mélodie à jouer,
- réaliser une communication téléphonique avec ledit téléphone cellulaire à partir dudit serveur,
- transmettre audit serveur, via ladite communication téléphonique, ladite mélodie jouée par le terminal de paiement électronique, et
- authentifier ladite mélodie par ledit serveur.

Ces caractéristiques et avantages et d'autres de la présente invention apparaîtront plus clairement au cours de la description détaillée suivante de celle-ci, faite en référence aux dessins joints, donnés à titre d'exemples non limitatifs, et sur lesquels
- la figure 1 représente un schéma fonctionnel illustrant les éléments du système et les étapes du procédé de la présente invention, selon un mode de réalisation avantageux de ceux-ci, et
- les figures 2 à 4 sont des variantes de configuration hardware utilisables pour mettre en oeuvre la présente invention.

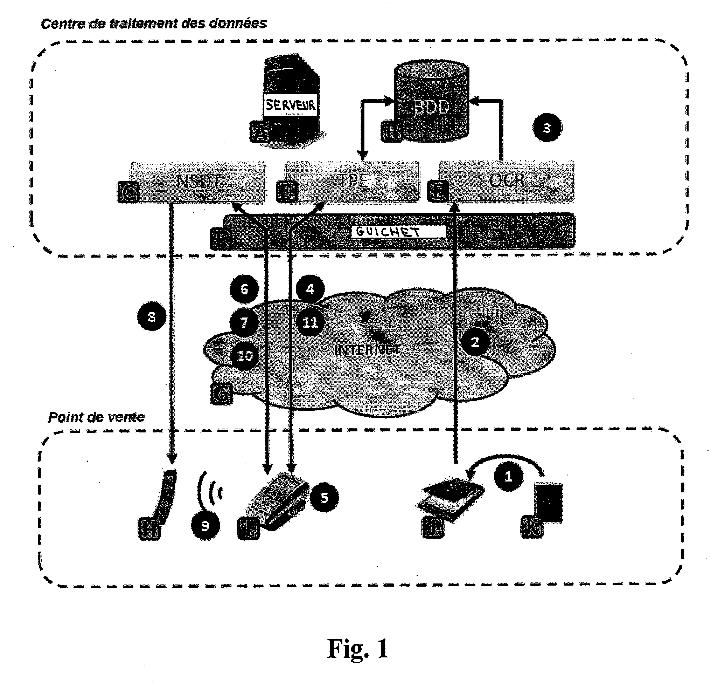

En se référant à la figure 1, le système d'enregistrement d'identité et d'identification sécurisée de la présente invention présente plusieurs éléments qui forment partie d'un centre de traitement de données et plusieurs autres éléments qui forment partie ou sont prévus au niveau du point de vente, ces différents éléments étant reliés les uns aux autres notamment par l'intermédiaire du réseau Internet.

Plus précisément, le centre de traitement de données comporte au moins un serveur A. Ces serveurs sont avantageusement hébergés dans un centre de traitement de données sécurisé et contrôlé. La suite de la description sera faite en référence à un seul serveur A, mais il est bien entendu que plusieurs serveurs sont envisageables.

Au niveau du point de vente, où se rend l'utilisateur qui souhaite s'enregistrer et/ou s'identifier, des moyens de copie J sont prévus pour réaliser une copie numérique de la pièce d'identité K de l'utilisateur à identifier. De préférence, ces moyens de copie J sont réalisés sous la forme d'un scanner. Ce scanner comporte des premiers moyens de transmission pour transmettre ladite copie numérisée audit serveur A. Avantageusement, ces premiers moyens de transmission utilisent le réseau Internet G, notamment via une connexion TCP/IP, PPP ou GPRS. En variante, l'utilisateur pourrait aussi envoyer, par exemple par email, une copie numérique de sa pièce d'identité directement au serveur, par exemple par l'intermédiaire d'un site internet d'enregistrement dédié. Au niveau du centre de traitement de données, des moyens de reconnaissance de caractères E sont prévus pour analyser ladite copie numérique reçue. Cette analyse sert notamment à extraire de ladite copie numérique des informations relatives à l'identité de l'utilisateur. Avantageusement, ces moyens de reconnaissance de caractères sont formés par un module OCR (« Optical Character Recognition ») qui est associé au serveur. Ce module OCR peut notamment décrypter la zone lisible des cartes d'identité ou passeports modernes appelée MRZ (« Machine Readable Zone »). Il permet aussi de récupérer la photo de la pièce d'identité ainsi que les informations classiques tels que le nom, la date de naissance, la date d'expiration, etc. La copie numérique de la pièce d'identité ainsi que lesdites informations relatives à l'identité de l'utilisateur sont ensuite transmises à une ou plusieurs base(s) de données B pour y être stockées. Ces bases de données sont donc sécurisées et répliquées et l'accès aux données est contrôlé.

Ainsi, la copie numérique n'est nécessaire que pour l'enregistrement de l'utilisateur. Par la suite, pour s'identifier, cette copie numérique stockée dans la base de données et/ou les informations relatives à l'identité qui en ont été extraites pourront être comparées avec la véritable pièce d'identité de l'utilisateur.

Au niveau du point de vente, un terminal de paiement électronique I, ci-après désigné TPE/POS, comporte avantageusement un afficheur, un clavier, une imprimante, un lecteur de carte magnétique, un haut parleur et un module de connexion à Internet. Avantageusement, le TPE/POS comporte un lecteur de carte à puce qui permet la lecture d'informations (par exemple à partir des cartes sésame, vitale, carte d'identité électronique, etc.), ainsi qu'un lecteur sans contact RFID, qui permet de lire par exemple les passeports biométriques à puce RFID. Ceux ci peuvent alors être mis à profit pour acquérir et enrichir le profil de l'utilisateur. L'afficheur comporte typiquement plusieurs lignes, par exemple quatre, et le clavier peut être numérique ou alphanumérique. La connexion au réseau Internet peut également se faire par connexion TCP/IP ou GPRS. Le scanner et le TPE/POS pourraient être reliés pour partager la connectivité. Des seconds moyens de transmission vont être utilisés pour transmettre les informations relatives à l'identité de l'utilisateur à partir de la base de données B vers ledit TPE/POS. Cette transmission se fait de préférence via le réseau Internet. Au niveau du centre de traitement, un module de gestion D des transactions ou transmissions TPE/serveur est prévu pour assurer la gestion et l'authentification du parc de TPE/POS ainsi que l'interface avec le guichet (ou « front office ») du centre de traitement. En effet, le centre de traitement de données comporte de préférence un module de gestion de guichet qui assure la concentration des connexions, le contrôle de cohérence des données et la sécurisation des échanges.

Lorsque les informations relatives à l'identité sont transmises au TPE/POS, elles vont s'afficher sur l'afficheur dudit TPE/POS. Le responsable du TPE/POS, c'est-à-dire le vendeur du point de vente, va donc pouvoir effectuer un premier contrôle en comparant l'affichage sur son TPE/POS avec la pièce d'identité que l'utilisateur va lui montrer. Il est à noter que cette étape de vérification visuelle par le vendeur n'est pas absolument essentielle au bon fonctionnement du système et du procédé de la présente invention.

Pour assurer l'identification sécurisée de l'utilisateur, un téléphone H dudit utilisateur à identifier est mis à contribution, de préférence son téléphone cellulaire ou mobile. Par exemple, ce numéro de téléphone peut être communiqué sur le point de vente, ou transmis par email ensemble avec la copie numérique de la pièce d'identité. Le numéro dudit téléphone est associé à un code secret, préalablement communiqué à l'utilisateur. Avantageusement, ce code secret, qui peut par exemple comporter quatre ou six chiffres, peut être choisi confidentiellement par l'utilisateur, à l'enregistrement ou ultérieurement s'il souhaite en changer. Ce code secret sert à encrypter les informations confidentielles de l'utilisateur dans la base de données, et est donc nécessaire pour l'identification et/ou le transfert d'informations vers des services tiers. En cas de perte de ce code, l'enregistrement sera donc de préférence à refaire pour des raisons de sécurité. L'utilisateur va alors saisir son numéro de téléphone sur le clavier dudit TPE/POS. Il va également saisir ledit code secret associé. Si ledit code secret est correct, c'est-à-dire s'il correspond au code secret associé au numéro de téléphone, alors des troisièmes moyens de transmission vont transmettre ledit numéro de téléphone saisi dudit TPE/POS audit serveur. A nouveau, cette transmission se fait préférentiellement via le réseau Internet. En retour, le serveur va envoyer audit TPE/POS, via des moyens d'envoi appropriés, une mélodie aléatoire, pour que cette mélodie soit jouée par ledit TPE/POS. Cet envoi de la mélodie est avantageusement également réalisé via le réseau Internet.

Le serveur comporte des moyens d'appel C dudit téléphone, permettant audit serveur d'appeler ledit téléphone. Avantageusement, ces moyens d'appel sont formés par un module NSDT (« Near Sound Data System »). L'appel téléphonique du téléphone de l'utilisateur par ledit serveur est réalisé juste après l'envoi de la mélodie audit TPE/POS. L'utilisateur décroche son téléphone lorsqu'il reçoit l'appel du serveur et approche son téléphone dudit TPE/POS pour transmettre via ladite communication téléphonique ladite mélodie jouée par ledit TPE/POS. Ledit serveur authentifie alors ladite mélodie comme étant celle qu'il a transmise précédemment au TPE/POS, ce qui lui permet d'identifier clairement le numéro de téléphone associé aux informations relatives à l'identité de la base de données. Les moyens d'authentification sonores du serveur font avantageusement partie dudit module NSDT.

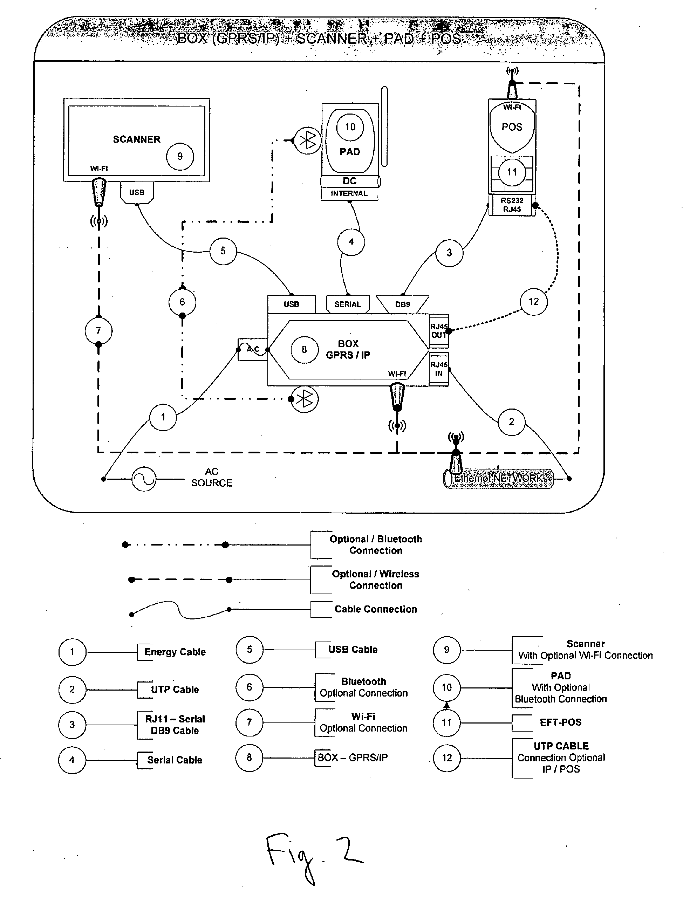

Ainsi, l'invention fournit un système et un procédé d'enregistrement d'identité et d'identification sécurisée qui permet en très peu de temps, typiquement deux à trois minutes, non seulement de s'enregistrer mais aussi de s'identifier de manière totalement sécurisée. En effet, pour frauder le système de l'invention, il faudrait non seulement présenter une fausse carte d'identité mais également avoir réussi à voler le téléphone et le code secret associé audit téléphone pour éventuellement prendre en défaut le système. Une étape optionnelle de vérification des informations relatives à l'identité affichées sur le TPE/POS avec la véritable pièce d'identité de l'utilisateur renforce encore davantage la sécurité du système. Bien entendu, avec la future génération des TPE/POS, ou avec le pad décrit ci-après en référence aux figures 2 à 4, la totalité ou la quasi-totalité de la copie numérique de la pièce d'identité, y compris la photo, pourra s'afficher sur l'écran des TPE/POS et/ou du pad, ce qui facilitera encore davantage la vérification d'identité.

Le procédé est particulièrement simple, l'utilisateur qui souhaite s'identifier se présente dans un point de vente, il montre sa carte d'identité au vendeur et tape sur le TPE/POS son numéro de téléphone et son code secret. Le TPE/POS transmet le numéro de téléphone au serveur si le code secret est correct. Ledit serveur envoie alors la mélodie aléatoire au TPE/POS et appelle immédiatement le téléphone. L'utilisateur décroche, approche le téléphone du TPE/POS qui reproduit ladite mélodie préalablement envoyée, et le serveur valide l'authentification s'il reconnait la mélodie jouée comme étant celle préalablement envoyée. Typiquement, le téléphone sera avantageusement distant de moins de 30 cm dudit TPE/POS au moment où la reconnaissance sonore est faite, pour éviter si possibles les bruits parasites.

La plate-forme d'enregistrement de l'invention permet l'enregistrement de clients en deux à trois minutes, dans des points de vente équipés de terminaux de paiement électronique, et de scanners possédant la fonctionnalité d'envoi de courriers électroniques. L'enregistrement avec authentification forte réalise le stockage sécurisé de la copie numérique de la pièce d'identité du client dans un centre de traitement de données, l'enregistrement du numéro de téléphone mobile du client comme « donnée publique », l'enregistrement du code confidentiel du client comme « donnée confidentielle », et la reconnaissance du téléphone mobile du client par authentification sonore, afin de valider que le numéro de téléphone saisi est celui du téléphone réellement en possession du client.

Un avantage de la présente invention est qu'une fois que l'utilisateur est enregistré, et que son enregistrement a été authentifié, il peut utiliser cette « identification électronique » à chaque fois qu'il souhaite s'identifier pour n'importe quel service. Ainsi, s'il s'identifie la première fois de manière électronique selon l'invention pour par exemple ouvrir une ligne téléphonique, il peut ensuite, s'il va dans un point de vente proposant un service de transfert d'argent, s'identifier de la même manière en utilisant la procédure d'identification de la présente invention, ce qui lui permet d'utiliser les différents services qui reconnaissent cette identification électronique. La présente invention permet donc de fournir un gain de temps très important, évite les enregistrements répétitifs, longs et fastidieux pour les utilisateurs, simplifie le travail des vendeurs et le rend plus efficace, et présente un caractère de sécurité très élevé. La présente invention s'applique donc à tout type de service nécessitant une identification certaine, tels que les ouvertures de compte bancaire, les transferts d'argent, etc.

Avantageusement, le profil de l'utilisateur peut être enrichi de nouveaux documents, tels que le permis de conduire, la carte grise, une facture EDF, etc. Ceci permet de fournir un profil complet, dont tout ou partie des informations pourront être transmis à des services tiers.

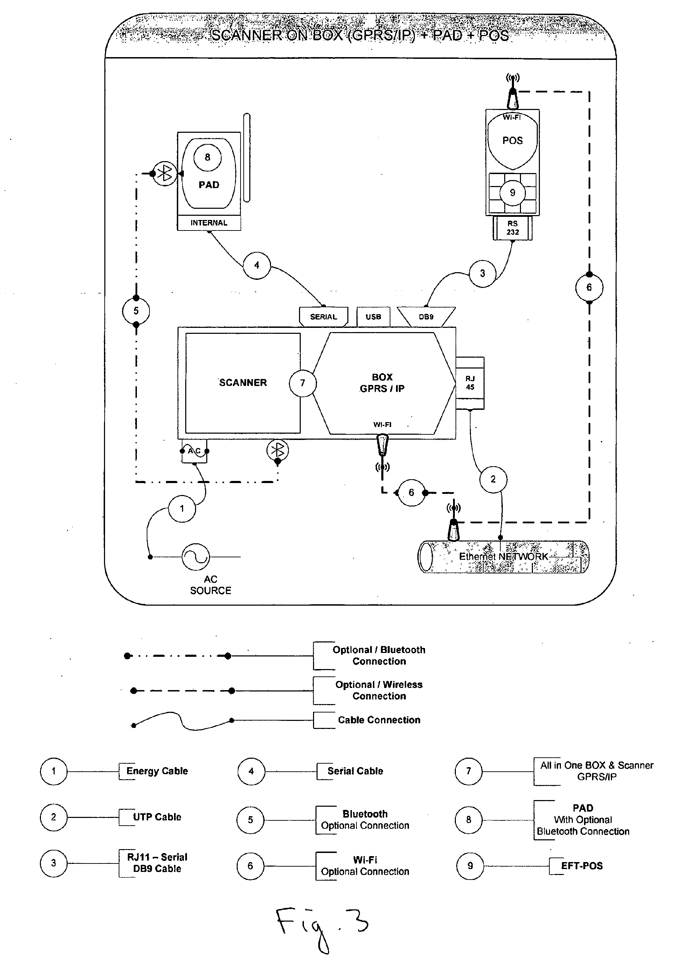

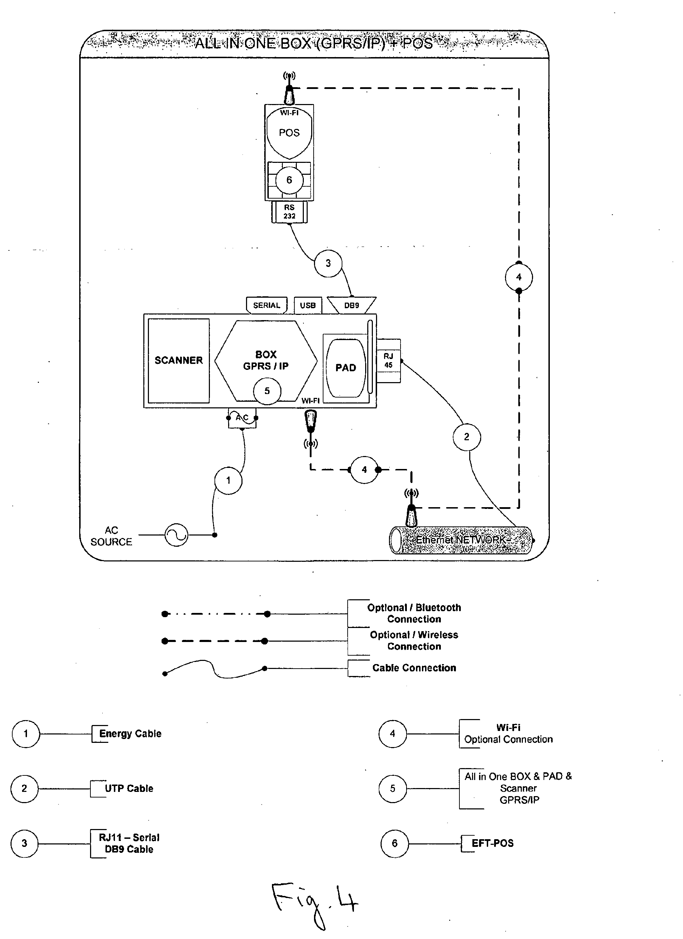

Les figures 2 à 4 illustrent des configurations hardware envisageables pour mettre en oeuvre la présente invention. Ainsi, dans la configuration illustrée schématiquement sur la figure 2, un scanner 9, un terminal électronique de paiement (TPE/POS) 11 et un pad 10 sont reliés à une boîte (Box) 8 qui assure l'interconnexion et les liaisons entres ces éléments et le ou les serveurs du système. Les connexions peuvent être filaires ou sans fil. Une configuration typique est celle où l'utilisateur/client est séparé du vendeur qui l'accueille au point de vente, typiquement par une vitre avec éventuellement une partie inférieure ouverte permettant le passage de documents. La boîte et le scanner peuvent alors être disposés du coté du vendeur, alors que le pad peut être disposé du coté de l'utilisateur, le TPE/POS pouvant passer d'un coté à l'autre de la séparation. L'utilisateur passe sa pièce d'identité au vendeur qui la scanne, et le pad, de préférence pourvu d'un afficheur, affiche des informations lisibles par l'utilisateur, par exemple la copie scannée de sa pièce d'identité pour vérification et validation. Le pad peut aussi servir à recueillir la signature de l'utilisateur, au moyen d'un stylet approprié. Dans une variante, le pad peut comporter une caméra, par exemple du type webcam, pour faire une photo numérique de l'utilisateur lors de la phase d'enregistrement. Ce pad pourrait aussi comporter un microphone pour capturer une phrase prononcée par l'utilisateur pour une reconnaissance vocale ultérieure. Le pad pourrait encore comporter des haut-parleurs adaptés à reproduire des sons, par exemple la mélodie à jouer envoyée par le serveur. Selon l'utilisation envisagée, le pad peut donc être l'interface principale de l'utilisateur, plutôt que le TPE/POS. Dans l'exemple de la figure 3, le scanner et la boîte/box sont réunis dans une seule et même unité globale, et dans l'exemple de la figure 4, le pad est aussi intégré à cette unité globale. Ces mises en oeuvre des figures 3 et 4 simplifient la connectique et les liaisons, filaires ou non, entre les différentes composantes du système. Toutefois, dans certaines applications, il peut être préférable de garder chaque composante séparée des autres, comme dans l'exemple de la figure 2. Les figures 2 à 4 illustrent des exemples de types de liaisons et/ou connexions possibles (USB, Serial, RJ45, RJ11, Bluetooth, Wi-Fi, etc.).

Bien que la présente invention ait été décrite en référence à des modes de réalisation particuliers, il est entendu qu'elle n'est pas limitée par les exemples représentés sur les dessins mais au contraire un homme du métier peut y apporter toutes modifications utiles sans sortir du cadre de la présente invention tel que défini dans les revendications annexées.

## Revendications

1. Système d'identification et d'enregistrement d'identité sécurisé, qui comporte :
- des moyens de copie (J) pour réaliser une copie numérique d'une pièce d'identité (K) de l'utilisateur à identifier,
- au moins un serveur (A),
- des premiers moyens de transmission pour transmettre ladite copie numérisée audit serveur,
- des moyens de reconnaissance de caractère (E) pour analyser ladite copie numérique et extraire de ladite copie numérique des informations relatives à l'identité de l'utilisateur de ladite copie numérique,
- au moins une base de données (B) pour stocker ladite copie numérique et lesdites informations relatives à l'identité de l'utilisateur,
- un terminal de paiement électronique (I), situé dans un point de vente,
- des seconds moyens de transmission pour transmettre lesdites informations relatives à l'identité de l'utilisateur vers ledit terminal de paiement électronique,
- un téléphone cellulaire (H) de l'utilisateur à identifier, associé à un code secret,
- des troisièmes moyens de transmission pour transmettre le numéro dudit téléphone cellulaire à partir dudit terminal de paiement électronique vers ledit serveur,
- des moyens d'envoi d'une mélodie à jouer par ledit serveur audit terminal de paiement électronique,
- des moyens d'appel (C) permettant audit serveur de réaliser une communication téléphonique avec ledit téléphone cellulaire, et
- des moyens d'authentification sonore (C) par ledit serveur de ladite mélodie jouée par ledit terminal de paiement électronique via ladite communication téléphonique avec ledit téléphone cellulaire.

2. Système selon la revendication 1, dans lequel ledit serveur comporte un module NSDT ou Near Sound Data system permettant d'appeler ledit téléphone cellulaire et de reconnaître une mélodie jouée par ledit terminal de paiement électronique.

3. Système selon la revendication 1 ou 2, dans lequel un module de gestion (F) assure la sécurisation de toutes les transmissions.

4. Système selon l'une quelconque des revendications précédentes, dans lequel les moyens de transmission utilisent le réseau Internet (G).

5. Système selon l'une quelconque des revendications précédentes, dans lequel un module de gestion (D) du terminal de paiement électronique est associé audit serveur pour gérer les transmissions entre ledit serveur et ledit terminal de paiement électronique.

6. Système selon l'une quelconque des revendications précédentes, dans lequel ledit terminal de paiement électronique comporte un afficheur, un clavier, une imprimante, un lecteur de carte magnétique, un haut parleur et un module de connexion à Internet.

7. Système selon l'une quelconque des revendications précédentes, dans lequel lesdits moyens de copie comportent un scanner.

8. Système selon l'une quelconque des revendications précédentes, dans lequel dans un point de vente un scanner, un pad et
un TPE/POS sont reliés à une boîte de gestion gérant les connexions et liaisons des ces éléments entre eux et avec le serveur.

9. Système selon la revendication 8, dans lequel ladite boîte de gestion, ledit scanner et ledit pad forment une seule unité globale.

10. Procédé d'identification et d'enregistrement d'identité sécurisé, qui comporte les étapes suivantes :
- réaliser une copie numérique (1) d'une pièce d'identité (K) de l'utilisateur à identifier,
- transmettre (2) ladite copie numérique à un serveur (A),
- réaliser une reconnaissance de caractères de ladite copie numérique pour extraire de ladite copie numérique des informations relatives à l'identité de l'utilisateur,
- stocker (3) ladite copie numérique et lesdites informations relatives à l'identité de l'utilisateur dans au moins une base de données (B),
- transmettre (4) à un terminal de paiement électronique (I), situé dans un point de vente, lesdites informations relatives à l'identité de l'utilisateur,
- afficher (5) lesdites informations relatives à l'identité de l'utilisateur sur l'afficheur dudit terminal de paiement électronique,
- saisir sur ledit terminal de paiement électronique le numéro de téléphone d'un téléphone cellulaire (H) de l'utilisateur à identifier,
- saisir sur ledit terminal de paiement électronique un code secret associé audit numéro de téléphone,
- transmettre (6) ledit numéro de téléphone audit serveur si ledit code secret est correct,
- envoyer (7) dudit serveur audit terminal de paiement électronique une mélodie à jouer,
- réaliser une communication téléphonique (8) avec ledit téléphone cellulaire à partir dudit serveur,
- transmettre (9) audit serveur, via ladite communication téléphonique, ladite mélodie jouée par le terminal de paiement électronique, et
- authentifier ladite mélodie par ledit serveur.

## Patentansprüche

1. System zur Feststellung und Aufzeichnung einer gesicherten Identität, bestehend aus:
- Kopiervorrichtungen (J) zum Erstellen einer digitalen Kopie (1) eines Ausweises (K) des zu identifizierenden Benutzers,
- mindestens einem Server (A),
- Erst-Übertragungseinrichtungen zum Übertragen besagter digitaler Kopie an besagten Server,
- Zeichenerkennungseinrichtungen (E) zum Analysieren besagter digitaler Kopie und zum Extrahieren von Informationen aus besagter digitaler Kopie bezüglich der Identität des Nutzers besagter digitaler Kopie,
- mindestens eine Datenbank (B) zum Speichern besagter digitaler Kopie und besagter Informationen bezüglich der Identität des Nutzers,
- ein elektronisches Zahlungsterminal (I) in einer Verkaufsstelle,
- Zweit-Übertragungseinrichtungen zum Übertragen besagter Informationen bezüglich der Identität des Nutzers zum besagten elektronischen Zahlungsterminal,
- ein Mobiltelefon (H) des zu identifizierenden Benutzers mit einer Geheimnummer,
- Dritt-Übertragungseinrichtungen zum Übertragen der Nummer besagten Mobiltelefons vom besagten elektronischen Zahlungsterminal an besagten Server,
- Vorrichtungen zum Senden einer zu spielenden Melodie von besagtem Server an besagtes elektronisches Zahlungsterminal,
- Anrufvorrichtungen (C), die es besagtem Server erlauben, eine Telefonverbindung zu besagtem Mobiltelefon herzustellen, und
- akustische Authentifizierungsvorrichtungen (C) des besagten Servers besagter Melodie, die gespielt wird vom besagten elektronischen Zahlungsterminal über besagte Telefonverbindung zu besagtem Mobiltelefon.

2. System nach Anspruch 1, wobei der besagte Server ein NSDT (Near Sound Data System = Sound-Datenübertragung)-Modul umfasst, mit dem es möglich ist, besagtes Mobiltelefon anzurufen und eine von besagtem elektronischen Zahlungsterminal gespielte Melodie zu erkennen.

3. System nach Anspruch 1 und 2, wobei ein Verwaltungsmodul (F) die Sicherung aller Übertragungen gewährleistet.

4. System nach einem der vorhergehenden Ansprüche, wobei die Übertragungseinrichtungen das Internet (G) nutzen.

5. System nach einem der vorhergehenden Ansprüche, wobei ein Verwaltungsmodul (D) des elektronischen Zahlungsterminals besagtem Server zugewiesen ist, um die Übertragungen zwischen besagtem Server und besagtem elektronischen Zahlungsterminal zu verwalten.

6. System nach einem der vorhergehenden Ansprüche, wobei das besagte elektronische Zahlungsterminal eine Anzeige, eine Tastatur, einen Drucker, ein Magnetkartenlesegerät, einen Lautsprecher und ein Internet-Anschlussmodul umfasst.

7. System nach einem der vorhergehenden Ansprüche, wobei besagte Kopiervorrichtungen einen Scanner umfassen.

8. System nach einem der vorhergehenden Ansprüche, wobei ein Scanner, ein Pad und ein TPE (terminal de paiement electronique = elektronisches Zahlungsterminal) / POS (point of sale terminal = Verkaufsstellen-Terminal) verbunden sind mit einer Verwaltungs-Box, die die Anschlüsse und Verbindungen dieser Elemente untereinander und mit dem Server verwaltet.

9. System nach Anspruch 8, wobei die besagte Verwaltungs-Box, der besagte Scanner und besagtes Pad eine einzige Gesamt-Einheit bilden.

10. Verfahren zur Feststellung und Aufzeichnung einer gesicherten Identität, bestehend aus den folgenden Schritten:
- Erstellen einer digitalen Kopie (1) eines Ausweises (K) des zu identifizierenden Benutzers,
- Übertragen (2) besagter digitaler Kopie an einen Server (A),
- Durchführen einer Zeichenerkennung besagter digitaler Kopie zum Extrahieren von Informationen aus besagter digitaler Kopie bezüglich der Identität des Nutzers besagter digitaler Kopie,
- Speichern (3) besagter digitaler Kopie und besagter Informationen bezüglich der Identität des Nutzers in mindestens eine Datenbank (B),
- Übertragen (4) besagter Informationen bezüglich der Identität des Nutzers an ein elektronisches Zahlungsterminal (1) in einer Verkaufsstelle,
- Anzeigen (5) besagter Informationen bezüglich der Identität des Nutzers auf der Anzeige von besagtem elektronischen Zahlungsterminal,
- Eingeben der Telefon-Nummer eines Mobiltelefons (H) des zu identifizierenden Benutzers auf besagtem elektronischen Zahlungsterminal,
- Eingeben der Geheimnummer von besagtem Mobiltelefon auf besagtem elektronischen Zahlungsterminal,
- Übertragen (6) von besagter Geheimnummer an besagten Server, ob besagte Geheimnummer korrekt ist,
- Senden (7) einer zu spielenden Melodie von besagtem Server an besagtes elektronisches Zahlungsterminal,
- Erstellen einer Telefonverbindung (8) zu besagtem Mobiltelefon von besagtem Server,
- Übertragen (9) besagter Melodie, die gespielt wird vom besagten elektronischen Zahlungsterminal an besagten Server über die besagte Telefonverbindung, und
- Authentifizieren besagter Melodie durch besagten Server.

## Claims

1. A secure identification and identity registration system, wherein is included:
- copying means (J) for making a digital copy of an identity document (K) belonging to the user to be identified,
- at least one server (A),
- first transmission means for transmitting said digitized copy to said server,
- character recognition means (E) for analyzing said digital copy and extracting from said digital copy information relating to the identity of the user of said digital copy,
- at least one database (B) for storing said digital copy and said information relating to the user's identity,
- an electronic payment terminal (I), located at a point of sale,
- second transmission means for transmitting said information relating to the user's identity to said electronic payment terminal,
- a cellular telephone (H) belonging to the user to be identified, associated with a secret code,
- third transmission means for transmitting the number of said cellular telephone from said electronic payment terminal to said server,
- means for sending a melody to be played from said server to said electronic payment terminal,
- calling means (C) allowing said server to carry out telephonic communication with said cellular telephone, and
- means (C) for audio authentication by said server of said melody played by said electronic payment terminal via said telephone call with said cellular telephone.

2. The system according to Claim 1, in which said server includes an NSDT or Near Sound Data System module making it possible to call said cellular telephone and to recognize a melody played by said electronic payment terminal.

3. The system according to Claim 1 or 2, in which a management module (F) provides security for all communications.

4. The system according to any one of the foregoing claims, in which the transmission means use the Internet network (G).

5. The system according to any one of the foregoing claims, in which an electronic payment terminal management module (D) is associated with said server for managing communication between said server and said electronic payment terminal.

6. The system according to any one of the foregoing claims, in which said electronic payment terminal includes a display, a keyboard, a printer, a magnetic card reader, a loudspeaker and an Internet connection module.

7. The system according to any one of the foregoing claims, in which said copying means include a scanner.

8. The system according to any one of the foregoing claims, in which, at a point of sale, a scanner, a pad and a EPT/POS are connected to a management box that manages the connections and links of these components to one another and with the server.

9. The system according to Claim 8, in which said management box, said scanner and said pad make up a single integral unit.

10. A secure identification and identity registration process, wherein are included the following steps:
- make a digital copy (1) of an identity document (K) belonging to the user to be identified,
- transmit (2) said digital copy to a server (A),
- perform character recognition on said digital copy to extract from said digital copy information relating to the user's identity,
- store (3) said digital copy and said information relating to the user's identity in at least one database (B),
- transmit (4) to an electronic payment terminal (I), located at a point of sale, said information relating to the user's identity,
- display (5) said information relating to the user's identity on said electronic payment terminal's display,
- enter into said electronic payment terminal the telephone number of a cellular telephone (H) belonging to the user to be identified,
- enter into said electronic payment terminal a secret code associated with said telephone number,
- transmit (6) said telephone number to said server if said secret code is correct,
- send (7) from said server to said electronic payment terminal a melody to be played,
- make a telephone call (8) to said cellular telephone from said server,
- transmit (9) to said server, via said telephone call, said melody played by the electronic payment terminal, and
- have said melody authenticated by said server.
